# EUROPEAN PATENT APPLICATION

(11) **EP 1 118 966 A1**
(43) Date of publication of application: **25.07.2001**
(21) Application number: 01300040.1
(22) Date of filing: 04.01.2001
(51) Int. Cl.: G07F 7/00, G07F 19/00

(54) **Home shopping network system**

(30) Priority: 19.01.2000 GB 0001169
(71) Applicant: Pace Micro Technology PLC, Shipley, West Yorkshire BD18 3LF (GB)
(72) Inventor: Tibbs, Vincent, Plymouth, Devon PL5 3DY (GB)
(74) Representative: Wood, Graham

(57) **Abstract**

The invention relates to a data device (2) said device incorporating a plurality of reception areas (8) each provided with connections to data processing means in the device, and each provided for the reception of a carrier (11) which can include thereon a memory and/or processing component (9) which can be selectively inserted in position by the user of said device, to allow the selective access of data from the carrier. The carriers can be provided by, for example, retail organisations and the device can be operated to allow the selective utilisation of a carrier of a particular organisation in processing, transmitting or receiving data to and from that particular organisation. There is thus no need for a separate data device to be provided for each retail organisation.

## Description

The invention to which this application relates is a network system which allows the user of data receiving apparatus to also transmit information and/or instructions to other organisations and, as a result of said instructions, receive selected services from said organisations.

The generation of new technology in relation to receivers which receive digital data which is transmitted from remote broadcasters such as television system broadcasters, is now well known. The receiver apparatus is typically provided in a premises and receives signals via satellite, cable or terrestrial means by which the data is broadcast from a remote location. A further feature of this receiver apparatus is provided with a communications link, which, in one case can be a telecommunications link, which allows the user of the receiver at the premises to transmit data from the receiver to a remote location or locations. This information can be, for example, to select to watch particular programmes for which a fee is payable, to provide audience research data, to participate in interactive shopping and the like. A further possibility is to provide the user with apparatus which allows that user, when the apparatus is selectively activated, to order goods or services from a remote organisation via the communications link. This means that, at least in theory, a user can select a number of goods and thereby create a shopping list, and the shopping list details can then be transmitted to the remote organisation who can provide said goods or services and, in a few hours or days, the remote organisation can provide the same which have been selected by the user. In order to generate these shopping lists, the same are required to be stored in an electronic format once generated and this requires a physical device which, at the present time, is both physically inconvenient such as, for example, a personal organiser and, furthermore is not directly associated with the particular organisation who is providing the goods and this can lead to confusion to the user as to from whom the goods are being ordered and, also is not attractive to the organisation as they have no means by which to generate customer loyalty. Furthermore, if the user wishes to deal with a number of different retail organisations, at present, they would need a number of said devices.

The aim of the present invention is to provide a means of generating and retaining a shopping list of goods by the user which is convenient to the user. A further aim is to provide a means whereby the device can be operable in conjunction with a number of retail organisations in an efficient and convenient manner.

In a first aspect of the invention there is provided a data device said device incorporating a plurality of reception areas each provided with a connection to data processing means in the data device, and each reception area provided for the reception of a carrier including a memory and/or processing component which can be selectively inserted in position by the user of said data device, to allow the selective operation of the data device with respect to the inserted carriers said carriers provided by an external organisation and including information relating to the said external organisation which can be stored and/or displayed to the user when the carrier is inserted in the data device and selectively accessed.

Typically the external organisation is a retail organisation such as a supermarket or other form of shop.

Typically the data device receives a plurality of carriers at any one time and selectively accesses data on said carriers in response to a control requirement.

In one embodiment the memory and/or processing components form the carrier and are located directly in said reception areas. The data device can include a series of reception areas for a number of carriers formed of integrated circuit components .

In an alternative embodiment the memory and/or processing components are carried on a carrier in the form of a card and the card can be inserted in position in the reception area to allow the component to connect with the data processing means in the data device.

In one feature of the invention the data processing means allows data input into the data device by the user to be routed to the appropriate memory and/or processing component of a carrier inserted in position to allow the storage and/or transfer of the data to another location via the carrier. In one embodiment the data is input onto the carrier by the user via a series of buttons and/or a barcode reader operable by the user and which include a means for the routing of the data to a particular processing and/or memory component.

In one feature the data device is provided with or connected to means which allow data to be received from a remote location and means of allowing data to be transmitted to the same or a number of remote locations in accordance with location identification data obtained from the carrier when inserted in the data device.

Typically the retail organisation information includes information relating to services and products and/or prices of said services and products.

In one embodiment, the information can be periodically added to the carrier when the carrier is presented at an outlet of the retail organisation and placed into a data transfer system at the retail outlet.

In an alternative embodiment the information is periodically added to the carrier and/or displayed via the data device when the carrier is inserted in the data device and the data device is connected to an external telecommunications system via which the data is received. Thus, when inserted in the device, the carrier causes the device to contact a remote location specified using location information provided on the carrier and it is from this location that the information data is downloaded.

In one embodiment the carrier is provided to be disposable, in that once inserted into the data device and the data is transferred from the carrier into the data device, the carrier can be discarded by the user. Thus the retail organisation can provide the carriers at each visit of the user to the retail outlet, as part of advertising, in magazines etc and from this, the user can gain information as to particular products and services on a regular basis.

Typically, the cards and/or integrated circuit components, although provided by different retail organisations are of a standard form so as to be readily accepted by the device.

In addition, or alternatively, the information inputting means includes a barcode reader which, upon reading a particular barcode can identify a particular retail organisation and, as a result, automatically selects which of the available carriers the data is to be transferred to, or accesses the identified carrier, obtains the location information and transfers the data to the appropriate retail organisation. Thus the invention can be used to allow information to be transmitted by the user to, for example, one or a number of retail organisations to place an order for particular goods or services with one or a number of retail organisations.

The use of a device which can receive a number of cards or integrated circuit components means that the user need only be provided with one of said data devices and the processing means of the same can be used for each of the retail organisations. This reduces the cost to the user and/or provider of the data device and furthermore, means that the user does not have a number of said devices which they are required to store or keep in their premises and retrieve when required.

In a further aspect of the invention there is provided a home retail system incorporating a data device with a plurality of reception areas each provided with a connection to data processing means in the data device, and each reception area provided for the reception of a carrier including a memory and/or processing component which can be selectively inserted in position by the user of said data device, to allow the selective operation of the data device with respect to the inserted carriers said carriers provided by a retail organisation and including information relating to products and/or services offered by the said retail organisation which can be stored and/or displayed to the user when the respective carrier is inserted in the data device and selectively accessed.

A specific embodiment of the invention is now described with reference to the accompanying diagram, which illustrates the device in one embodiment of the invention.

A device 2 is shown in the accompanying diagram which is provided in one embodiment of the invention. The device comprises a screen 3 which shows information which has been inputted by the use of a keyboard 4 which can be user operated to input information and control commands to the data device and/or apparatus connected thereto, and/or a barcode reader 6 whose use will be explained in detail later, and a series of reception areas or ports 8 at spaced locations for the reception of carriers on which data can be stored or held, such as integrated circuit components 9.

In this example, the ports are shown to receive integrated circuit components mounted on carriers in the form of credit card shaped sheets of material which can be inserted into one of the ports and, on said cards are supported the integrated circuit components and or memory devices. In whichever format, the carrier, when inserted, makes connection with and co-operates with data processing means. In one embodiment of the invention these processing means can be provided as part of a broadcast data receiver 10 which allows for the reception of broadcast data via cable, satellite or terrestrial means 12 and for the reception and processing of said data to provide any of a range of user selectable services, one of which includes the ability to undertake home shopping.

The device is also provided, in one embodiment via the receiver, with a communications link 13 which allows the transmission of data from the device to a remote location or locations, and in this case the communications link is a telephone line. In use, the data device can be provided separately from or at the same time as a broadcast data receiver. Retail organisations can then produce and offer to users carriers which carry data relating to the services offered. The complexity and cost of each of the carriers can be determined by the retail organisation but will typically be of a uniform format.

Upon receiving the carrier, the user can insert the same in one of the location slots 8 whereupon the device will acknowledge the existence of said carrier and the same is then active. An audible noise and /or light display can be generated by the feature 14 when an item has been successfully 'scanned' into the device.

The integrated circuit component can include information which allows the device to contact a particular retail organisation who provided the carrier, can display information relating to products or services offered by the retail organisation and/or allow the user to transmit information or data to them.

Thus, for example, if a user wishes to compile a shopping list of products to be ordered from a retail organisation or organisations, they can take equivalent goods which are already in their premises, and use the barcode reader 6 to read the barcodes from said goods. As part of the barcode information, there is an identification of the retail organisation from which the goods were purchased and this information, when received by the device allows the device to not only identify the product in question, but direct that product information to the identified retail organisation carrier 9 and hence ensure that the goods from that retail organisation are re-ordered. The data relating to the order can then be ordered from the same organisation via the device and communications link.

Alternatively the "shopping list" may be compiled and held in memory and allocated in the memory to a particular template shopping list for each retailer/supermarket represented on the device by the carriers inserted at that time and the user can then subsequently decide to forward the list electronically.

In an alternative embodiment, rather than a series of carriers with integrated circuit components being input into the device, the device may include a memory and the user can input into the memory, information relating to a series of retail organisations and which information is referred to by the device, when selected, to route information which is input into the device and also route data transmissions from the device to remote locations. In this embodiment the carriers issued by the retailer/supermarket, but once the same has been inserted into the device include the information which may also or alternatively include product or service information and all or selected data can be downloaded onto the memory, so that the components are no longer required as the relevant information is retained in memory.

Information can also be downloaded by the retail organisation from a remote location and which retail organisation is indicated as being of relevance to the device as the user has already selected the same by inserting the retail organisation's carrier into the data device on a previous occasion. This information may show discounts/special offers etc. This information data may be displayed on a display screen of the same or a separate data device which may be connected by either radio/satellite/cable.

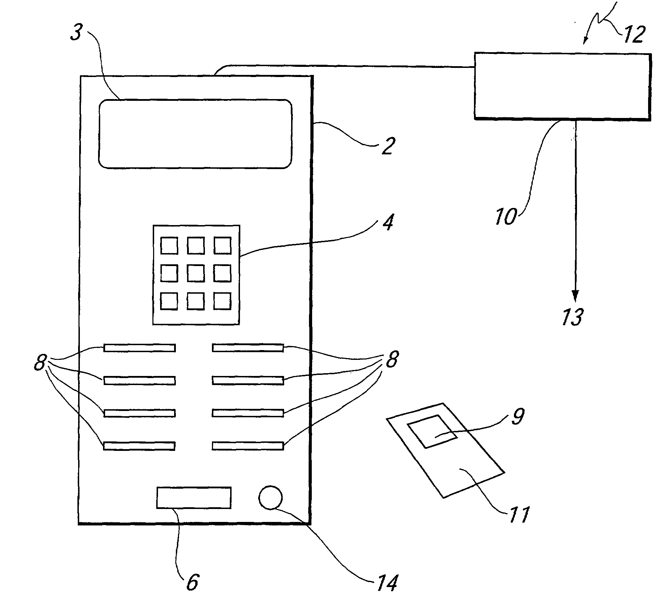

## Claims

1. A data device said device incorporating a plurality of reception areas each provided with a connection to data processing means in the data device, and each reception area provided for the reception of a carrier including a memory and/or processing component which can be selectively inserted in position by the user of said data device, to allow the selective operation of the data device with respect to the inserted carriers said carriers provided by an external organisation and including information relating to the said external organisation which can be stored and/or displayed to the user when the carrier is inserted in the data device and selectively accessed.

2. A data device according to claim 1 characterised in that the external organisation is a retail organisation.

3. A data device according to claim 1 characterised in that the device includes a series of reception areas for a number of carriers formed of integrated circuit components .

4. A data device according to claim 1 characterised in that the memory and/or processing components are carried on a carrier in the form of a card.

5. A data device according to claim 4 characterised in that the card can be inserted in position in the reception area to allow the component to connect with the data processing means in the data device.

6. A data device according to claim 1 characterised in that the data processing means allows data input into the data device by the user to be routed to the appropriate memory and/or processing component of a carrier inserted in position to allow the storage and/or transfer of the data to another location via the carrier.

7. A data device according to claim 6 characterised in that the data is input onto the carrier by the user via a series of buttons and/or a barcode reader operable by the user and which include a means for the routing of the data to a particular processing and/or memory component.

8. A data device according to claim 1 characterised in that the data device is provided with or connected to means which allow data to be received from a remote location and means of allowing data to be transmitted to the same or a number of remote locations in accordance with location identification data obtained from the carrier when inserted in the data device.

9. A data device according to claim 1 characterised in that the retail organisation information includes information relating to services and products and/or prices of said services and products.

10. A data device according to claim 9 characterised in that the information is periodically added to the carrier when the carrier is presented at an outlet of the retail organisation and placed into a data transfer system at the retail outlet.

11. A data device according to claim 9 characterised in that the information is periodically added to the carrier and/or displayed via the data device when the carrier is inserted in the data device and the data device is connected to an external telecommunications system via which the data is received.

12. A data device according to claim 11 characterised in that when inserted in the device, the carrier causes the device to contact a remote location specified using location information provided on the carrier and it is from this location that the information data is downloaded.

13. A data device according to claim 1 wherein the carrier is disposable, in that once inserted into the data device and the data is transferred from the carrier into the data device, the carrier can be discarded by the user.

14. A data device according to claim 1 wherein the data device operates in connection with a broadcast data receiver.

15. A home retail system incorporating a data device with a plurality of reception areas each provided with a connection to data processing means in the data device, and each reception area provided for the reception of a carrier including a memory and/or processing component which can be selectively inserted in position by the user of said data device, to allow the selective operation of the data device with respect to the inserted carriers said carriers provided by a retail organisation and including information relating to products and/or services offered by the said retail organisation which can be stored and/or displayed to the user when the respective carrier is inserted in the data device and selectively accessed.
